# EUROPEAN PATENT SPECIFICATION

(11) **EP 4 207 478 B1**
(45) Date of publication and mention of the grant of the patent: **04.11.2026**
(21) Application number: 21933847.2
(22) Date of filing: 31.03.2021
(51) Int. Cl.: H01M 50/538, H01M 50/531, H01M 10/0587, H01M 50/533, H01M 4/62, H01M 50/534, H01M 50/536, H01M 10/052, H01M 4/70, H01M 4/66, H01M 4/13, H01M 10/04

(54) **ELECTROCHEMICAL APPARATUS AND ELECTRONIC APPARATUS**
ELEKTROCHEMISCHE VORRICHTUNG UND ELEKTRONISCHE VORRICHTUNG
APPAREIL ÉLECTROCHIMIQUE ET APPAREIL ÉLECTRONIQUE

(43) Date of publication of application: 05.07.2023
(73) Proprietor: Ningde Amperex Technology Ltd., Ningde, Fujian 352106 (CN)
(72) Inventor: FANG, Deyu, Ningde, Fujian 352106 (CN)
(74) Representative: Dehns Germany Partnerschaft mbB
(86) International application number: PCT/CN2021/084689
(87) International publication number: WO 2022/205183

(56) References cited:
- CN-A- 106 450 157
- CN-A- 106 531 965
- JP-A- 2002 100 364
- JP-A- 2008 218 202

## Description

### FIELD

The present application relates to the battery technology field, and in particular to an electrochemical device and an electronic device.

### BACKGROUND

In order to pursue higher volumetric energy density, a current collector (copper foil or aluminum foil) used in consumer electrochemical devices is continuously thinned, the coating weight per unit area is continuously increased, and the repeated expansion in a charge and discharge process finally leads to a fracture of current collector of a battery with a wound structure at an uneven stress position such as bending section or junction of single-sided and double-sided. On the one hand, the fracture of the current collector may reduce the battery capacity and reduce the experience of consumers. On the other hand, there may be burrs in the current collector at the fracture, which has a potential risk of short circuit. JP 2008 218202 A discloses a wound cylindrical electrode having a connecting member where the electrode transitions from having active material on both sides of the current collector to having active material only on the internal side of the current collector.

### SUMMARY

In view of the above situation, it is necessary to provide an electrochemical device and an electronic device, so as to improve the problem of a fracture of current collector.

This is achieved by an electrochemical device according to claim 1. Dependent claims provide further advantageous embodiments.

### BRIEF DESCRIPTION OF THE DRAWINGS

Fig. 1 is a sectional view of an electrode assembly in an embodiment of the present application.
Fig. 2 is an enlarged view of a position region of a connecting part in an embodiment of the present application.
Fig. 3 is another view of a position region of the connecting part in another embodiment of the present application.
Fig. 4 is an enlarged view of a position region of the connecting part in another embodiment of the present application.
Fig. 5 is a plan view of a first conductive member in another embodiment of the present application.
Fig. 6 is a plan view of a first conductive member in another embodiment of the present application.
Fig. 7 is a sectional view of a first conductive member in another embodiment of the present application.
Fig. 8 is an enlarged view of the position region of the connecting part in another embodiment of the present application.
Fig. 9 is an enlarged view of the position region of the connecting part in another embodiment of the present application.
Fig. 10 is a sectional view of an electrode assembly in another embodiment of the present application.
Fig. 11 is a sectional view of an electrode assembly in another embodiment of the present application.
Fig. 12 is a sectional view of an electrode assembly in another embodiment of the present application.
Fig. 13 is a sectional view of an electrode assembly in another embodiment of the present application.
Fig. 14 is a sectional view of an electrode assembly in another embodiment of the present application.
Fig. 15 is a sectional view of an electrode assembly in another embodiment of the present application.
Fig. 16 is a sectional view of an electrode assembly in another embodiment of the present application.

### Reference numerals of main elements

| | |
|---|---|
| Electrode assembly | 100 |
| First bending section | 1 |
| First section | 2 |
| Second bending section | 3 |
| Second section | 4 |
| First electrode plate | 5 |
| First current collector | 51 |
| First part | 511 |
| First outer surface | 5111 |
| First inner surface | 5112 |
| Second part | 512 |
| Connecting part | 5121 |
| First bending part | 5122 |
| Second bending part | 5123 |
| Second outer surface | 5124 |
| Second inner surface | 5125 |
| First active material layer | 52 |
| First starting part | 53 |
| First ending part | 54 |
| Second electrode plate | 6 |
| Second current collector | 61 |
| Second active material layer | 62 |
| Second starting part | 63 |
| Second ending part | 64 |
| Separator | 7 |
| First conductive member | 81 |
| Substrate layer | 811 |
| Conductive layer | 812 |
| Adhesive layer | 813 |
| Second conductive member | 82 |
| Third conductive member | 83 |
| First adhesive member | 84 |
| Second adhesive member | 85 |
| Third adhesive member | 86 |
| First metal part | 91 |
| Second metal part | 92 |
| Winding center | 200 |
| Winding direction | X |
| Thickness direction | Y |

The following specific embodiments will further describe the present application in combination with the above drawings.

### DETAILED DESCRIPTION

Hereinafter, the technical solutions in the embodiments of the present application will be described in combination with the drawings in the embodiment of the present application. It goes without saying that the described embodiments are a part of the embodiments of the present application, not all of the embodiments.

It should be noted that when an element is considered to "connect" another element, it may be directly connected to another element or there are other elements arranged between them at the same time. When an element is considered to be "arranged" on another element, it may be an element arranged directly on another element or there are other elements arranged between them at the same time.

Unless otherwise defined, all technical and scientific terms used herein have the same meanings as those commonly understood by those skilled in the art of the present application. The term "and/or" as used herein includes any and all combinations of one or more related listed items.

An embodiment of the present application provides an electrochemical device and an electronic device, and the electronic device includes the electrochemical device. The electrochemical device includes an electrode assembly, and the electrode assembly is configured to be a wound structure. The electrode assembly comprises a first electrode plate, a second electrode plate, and a conductive member. The electrode assembly is provided with a first bending section. The first electrode plate includes a first current collector and a first active material layer arranged on the first current collector, and along a winding direction, the first current collector includes a first part and a second part that are connected in sequence. Both surfaces of the first part are arranged with the first active material layer, an inner surface of the second part is provided with the first active material layer, and the second part includes a bending part located at an outermost layer of the first bending section. The conductive member connects the outer surface of the second part and the first active material layer arranged on the outer surface of the first part, and/or is arranged on the outer surface of the bending part. The above-mentioned electrochemical device connects the outer surfaces of the first part and the second part and/or covers the outer surface of the bending part of the second part through the conductive member, so as to cover a region prone to a fracture of current collector with the conductive member. After the current collector fractures, the conductive member can electrically connect the electrode plate at the fracture of the current collector, which reduces a capacity loss of the electrochemical device due to the fracture of the current collector or a risk of short circuit caused by the fracture of the current collector, and in addition, the conductive member has a simple and reliable structure and low cost.

The electrochemical device can provide electric energy for the electronic device.

Hereinafter, an embodiment of the present application will be further described in combination with the accompanying drawings.

The present disclosure provides an electrochemical device for supplying electric energy to an electronic device. The electrochemical device includes an electrode assembly.

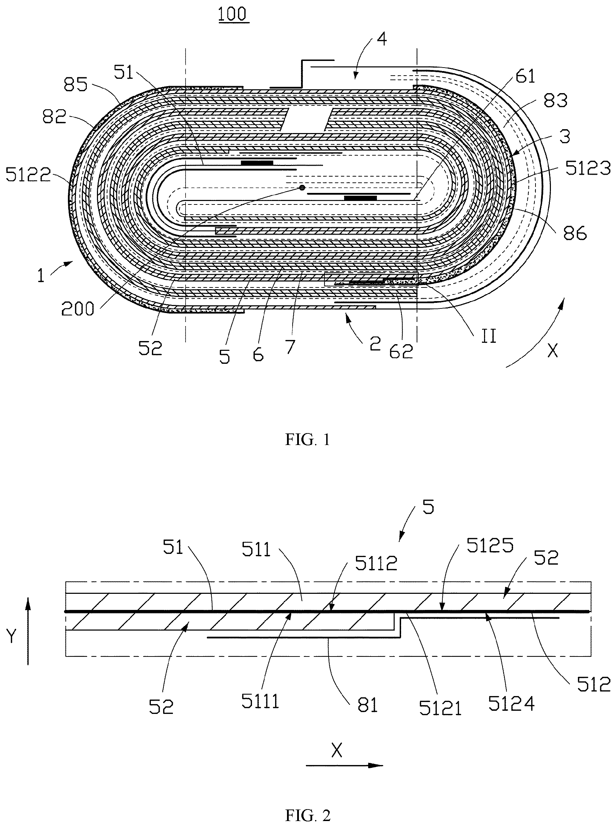

As shown in Fig. 1, the electrode assembly 100 includes a first electrode plate 5, a second electrode plate 6 and a separator 7. The separator 7 is arranged between the first electrode plate 5 and the second electrode plate 6, and the first electrode plate 5, the second electrode plate 6 and the separator 7 are laminated in sequence and wound along a winding direction X to form a wound structure.

The first electrode plate 5 includes a first current collector 51 and a first active material layer 52 arranged on the first current collector 51. The second electrode plate 6 includes a second current collector 61 and a second active material layer 62 arranged on the second current collector 61.

In some embodiments, the first electrode plate 5 may be a cathode electrode plate, and the first current collector 51 may be made of metal materials such as aluminum foil. The second electrode plate 6 may be an anode electrode plate, and the second current collector 61 may be made of copper foil material. In some embodiments, the first electrode plate 5 may be an anode electrode plate and the second electrode plate 6 may be a cathode electrode plate.

As shown in Figs. 1, 2 and 3, the first current collector 51 includes a first part 511 and a second part 512. In a wound state, the first part 511 and the second part 512 are connected in sequence along the winding direction X.

In a thickness direction Y of the first electrode plate 5, both sides of the first part 511 include a first outer surface 5111 and a first inner surface 5112, respectively. Both the first outer surface 5111 and the first inner surface 5112 are arranged with the first active material layer 52, and the first outer surface 5111 is located on a side of the first part 511 deviated from a winding center. In some embodiments, the thickness direction Y of the first electrode plate 5 is consistent with that of the electrode assembly 100.

According to the invention, the first outer surface 5111 of the first part 511 exposes the first current collector 51.

In the thickness direction of the first electrode plate 5, both sides of the second part 512 include a second outer surface 5124 and a second inner surface 5125 respectively. The second inner surface 5125 is provided with a first active material layer 52, and the second outer surface 5124 is located on a side of the second part 512 deviated from the winding center.

In some embodiments, the second outer surface 5124 on the second part 512 exposes the first current collector 51.

In some embodiments, the second outer surface 5124 of the second part 512 may be partially provided with a first active substance layer 52. In some embodiments, the second outer surface 5124 of the second part 512 may be provided with no first active material layer 52.

In some embodiments, the first inner surface 5112 of the first part 511 is connected with the second inner surface 5125 of the second part 512 in sequence along the winding direction X.

In some embodiments, the first outer surface 5111 of the first part 511 is connected with the second outer surface 5124 of the second part 512 in sequence along the winding direction X.

In the present application, the winding center refers to a center of the innermost layer where the electrode assembly 100 starts winding. In some embodiments, the electrode assembly 100 is wound from the separator 7, and the winding center is a winding center 200 of the separator 7.

In the present application, an inner surface refers to a position towards the winding center, and an outer surface refers to a position deviated from the winding center.

A connecting part 5121 is arranged at a position where the first portion 511 is connected with the second portion 512. According to the invention, the first part 511 and the second part 512 are connected in sequence along the winding direction X, and the connecting part 5121 may be a part of the second part 512 connected with the first part 511.

In some embodiments, the second outer surface 5124 of the second part 512 is provided with no first active material layer 52, or is provided with the first active material layer 52, but the thickness of the first active material layer 52 on both sides of the second part 512 along the thickness direction of the first electrode plate 5 is less than that of the first active material layer 52 on both sides of the first part 511, which may lead to stress concentration in a position region of the connecting part 5121 during stress, which may easily lead to the fracture of the first current collector 51 in this region, further resulting in a capacity loss of the electrochemical device or generation of burr which has a risk of short circuit.

Therefore, in order to avoid a problem of a fracture of the first current collector 51 or short circuit after the fracture, the electrode assembly 100 further includes a first conductive member 81, and the first conductive member 81 connects the first outer surface 5111 of the first part 511 and the second outer surface 5124 of the second part 512. When the first part 511 and the second part 512 fracture, the first conductive member 81 can continue to connect the first part 511 and the second part 512, so that the first part 511 and the second part 512 can continue to maintain electrical connection.

In some embodiments, the first conductive member 81 connects the outer surface of the connecting part 5121.

In some embodiments, the first conductive member 81 may be a conductive tape.

In some embodiments, the first conductive member 81 may be a metal foil such as aluminum foil, silver foil, gold foil, etc., or an alloy foil.

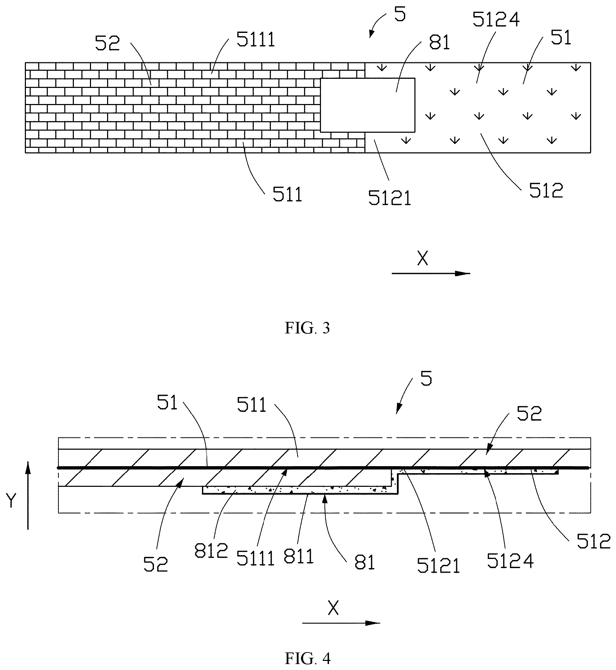

In some embodiments, as shown in Fig. 4, when the first conductive member 81 is a conductive tape, the conductive tape may include a substrate layer 811 and a conductive layer 812; the substrate layer 811 and the conductive layer 812 are laminated.

In some embodiments, the conductive layer 812 may include conductive particles, the conductive layer 812 connects the second outer surface 5124 and the first active material layer 52 arranged on the first outer surface 5111, and the conductive particles can electrically connect the first current collector 51 of the first part 511 with the first current collector 51 exposed from the second outer surface 5124.

In order for the conductive layer 812 to stably connect the first electrode plate 5, in some embodiments, the conductive layer further includes an adhesive material.

In some embodiments, the conductive tape further includes an adhesive layer 813.

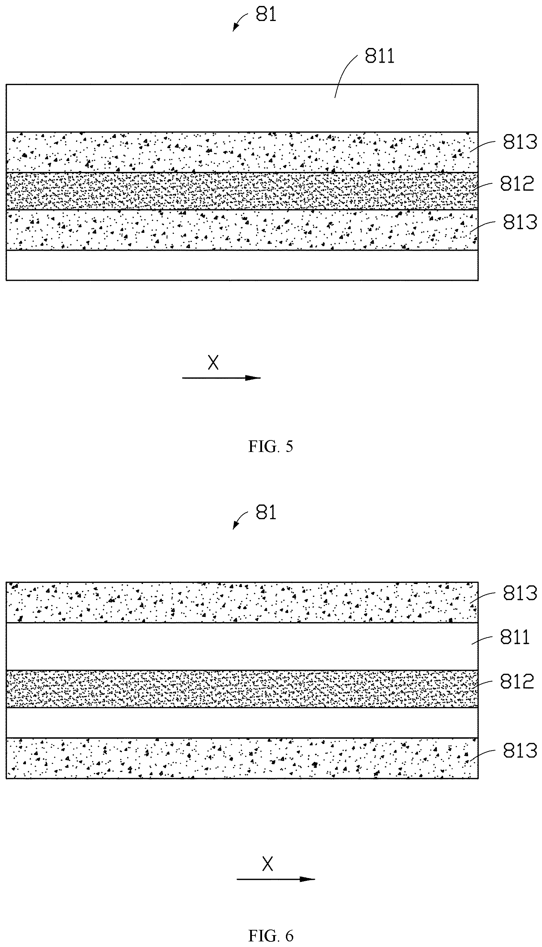

As shown in Figs. 5 and 6, the adhesive layer 813 may be arranged on a surface of the substrate layer 811 which is on the same side as the conductive layer 812.

In some embodiments, the adhesive layer 813 and the conductive layer 812 may be arranged in a staggered manner along a direction perpendicular to the winding direction X.

In some embodiments, the adhesive layer 813 may be arranged at an edge of the substrate layer 811, and the conductive layer 812 may be arranged at a middle position of the surface of the substrate layer 811 by extending along the winding direction X.

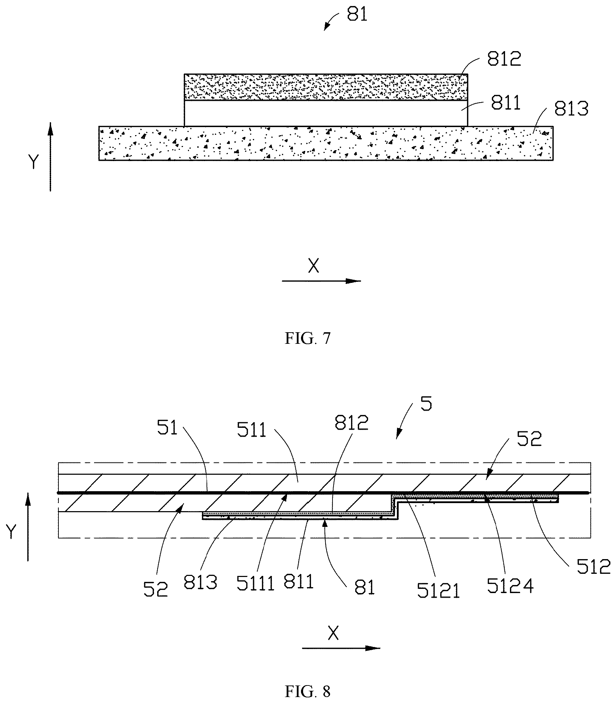

In some embodiments, as shown in Fig. 7, the adhesive layer 813 may also be arranged on a side of the substrate layer 811 deviated from the conductive layer 812.

When viewed along the thickness direction of the conductive tape, a part of the adhesive layer 813 is adhered to the substrate layer 811, and the other part of the adhesive layer 813 is located outside the substrate layer 811 for adhering the first electrode plate 5, so that the conductive layer 812 can be adhered to the first electrode plate 5. In some embodiments, the thickness direction Y of the first electrode plate 5 is consistent with that of the conductive tape.

In some embodiments, the substrate layer includes at least one selected from the group consisting of cellulose derivative, polyvinyl chloride, polyolefin, polystyrene, polyester, polyimide, polyamide, polycarbonate, and polyphenylene sulfide.

In some embodiments, the adhesive material includes at least one selected from the group consisting of rubber-based resin, acrylic-based resin, and silicone-based resin. In some embodiments, the conductive particles include at least one selected from the group consisting of metal particles, conductive polymers, and carbon materials.

In some embodiments, the conductive polymer includes at least one selected from the group consisting of polythiophene, polyaniline, polypyrrole and polyacetylene.

In some embodiments, the carbon material includes at least one selected from the group consisting of carbon black, acetylene black, Ketjen black, graphite, graphene, carbon nanotubes and carbon nanorods.

As shown in Fig. 8, in some embodiments, the adhesive layer 813 may also be arranged between the substrate layer 811 and the conductive layer 812.

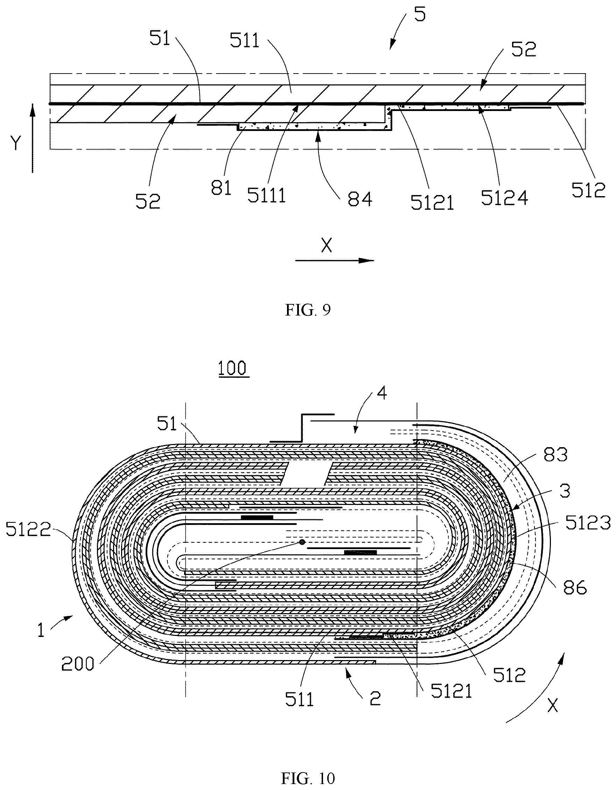

As shown in Fig. 9, in some embodiments, the first conductive member 81 may be a metal sheet. In order to ensure the reliability of the metal sheet to connect the first electrode plate 5, the electrode assembly 100 further includes a first adhesive member 84, and the first adhesive member 84 adheres the first conductive member 81 and the first electrode plate 5.

In some embodiments, the first adhesive member 84 may be arranged on a side of the first conductive member 81 facing away from the first electrode plate 5. At this time, when viewed along the thickness direction of the first conductive member 81, one part of the first adhesive member 84 is adhered to the first conductive member 81, and the other part of the first adhesive member 84 is adhered to the first electrode plate 5. In some embodiments, the thickness direction Y of the first electrode plate 5 is consistent with that of the first conductive member 81.

As shown in Figs. 1 and 10, when the electrode assembly 100 expands, the first electrode plate 5 is subjected to tension, which may lead to a fracture of the first current collector 51 in a region of the connecting part 5121 prone to stress concentration. When the first current collector 51 in this region fractures, the first conductive member 81 can electrically reconnect the first collector 51 on both sides of the crack, so as to prevent burr caused by fracture from leading to short circuit.

According to the invention, the electrode assembly 100 is configured to be a wound structure so that the electrode assembly 100 includes a first bending section 1, a first straight section 3, optionally also second bending section 3 and a second section 4 that are connected in sequence. The connecting part 5121 is located on the first section 2.

The second part 512 includes a first bending part 5122 on the first bending section 1 and a second bending part 5123 on the second bending section 3.

Due to the influence of bending, the first current collector 51 on the first bending part 5122 and/or the second bending part 5123 is subject to tension and is prone to fracture when stressed. If the first current collector 51 on the first bending part 5122 and/or the second bending part 5123 fractures, the capacity of the electrochemical device will be lost or burrs will be generated, so that there is a risk of short circuit.

In order to avoid the problem of a fracture of the first current collector 51 on the first bending part 5122 and/or the second bending part 5123 or short circuit after the fracture, the electrode assembly 100 further includes a second conductive member 82 and a third conductive member 83, the second conductive member 82 is coated on an outer surface of the first bending part 5122, and the third conductive member 83 is coated on an outer surface of the second bending part 5123.

The material and composition of the second conductive member 82 and the third conductive member 83 may be the same as that of the first conductive member 81, which will not be repeated herein.

In order to ensure the reliability of the second conductive member 82 and the third conductive member 83 to connect the first electrode plate 5, the electrode assembly 100 further includes a second adhesive member 85 and a third adhesive member 86, the second adhesive member 85 adheres the second conductive member 82 and the first electrode plate 5, and the third adhesive member 86 adheres the third conductive member 83 and the first electrode plate 5.

The material and composition of the second adhesive member 85 and the third adhesive member 86 may be the same as that of the first adhesive member 84, which will not be repeated herein.

In order to prevent the fracture of the first current collector 51 on the first bending part 5122 from adversely affecting the electrochemical device, the second conductive part 82 can be completely coated on an outer surface of the first bending part 5122, that is, along the winding direction X, the second conductive part 82 covers the first bending part 5122, and both ends connects the first section 2 and the second section 4.

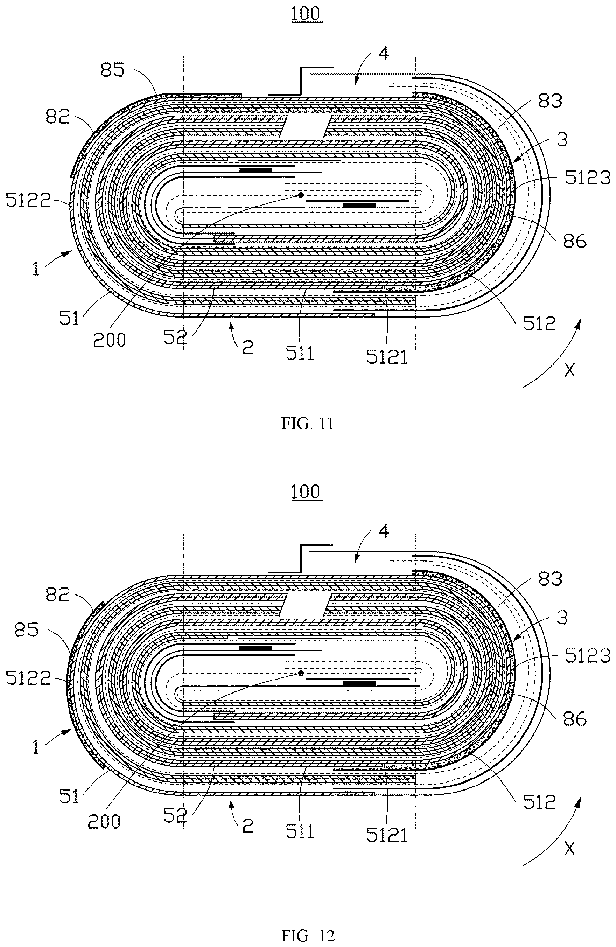

As shown in Figs. 11 and 12, in some embodiments, the second conductive member 82 can cover only a region on the first bending section 5122 where the first collector 51 is prone to fracture, such as the first bending section 5122 at a connecting inflection point of the first bending section 1 and the first section 2 and/or the second section 4, or the first bending section 5122 on the first bending section 1.

In order to prevent the fracture of the first current collector 51 on the second bending part 5123 from adversely affecting the electrochemical device, the third conductive member 83 can be completely coated on an outer surface of the second bending part 5123, that is, along the winding direction X, the third conductive member 83 covers the second bending part 5123, and both ends connect the first section 2 and the second section 4. At this time, if an end portion of the third conductive member 83 connecting the first section 2 is connected to the first active material layer arranged on the first outer surface 5111, the first conductive member 81 can be omitted and the third conductive member 83 can be connected to an outer surface of the connecting portion 5121, which can save the cost.

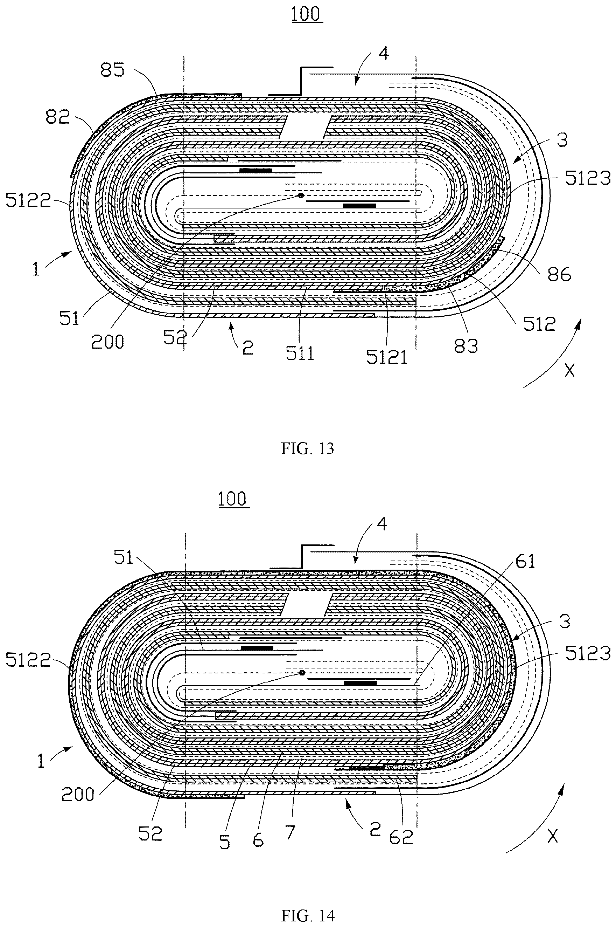

As shown in Fig. 13, in some embodiments, the third conductive member 83 can cover only a region on the second bending part 5123 where the first collector 51 is prone to fracture, such as the second bending part 5123 at a connecting inflection point of the second bending section 3 and the first section 2 and/or the second section 4. In some embodiments, any two of the first conductive member 81, the second conductive member 82 and the third conductive member 83 may be connected to each other.

As shown in Fig. 14, in some embodiments, the first conductive member 81, the second conductive member 82 and the third conductive member 83 may be connected together.

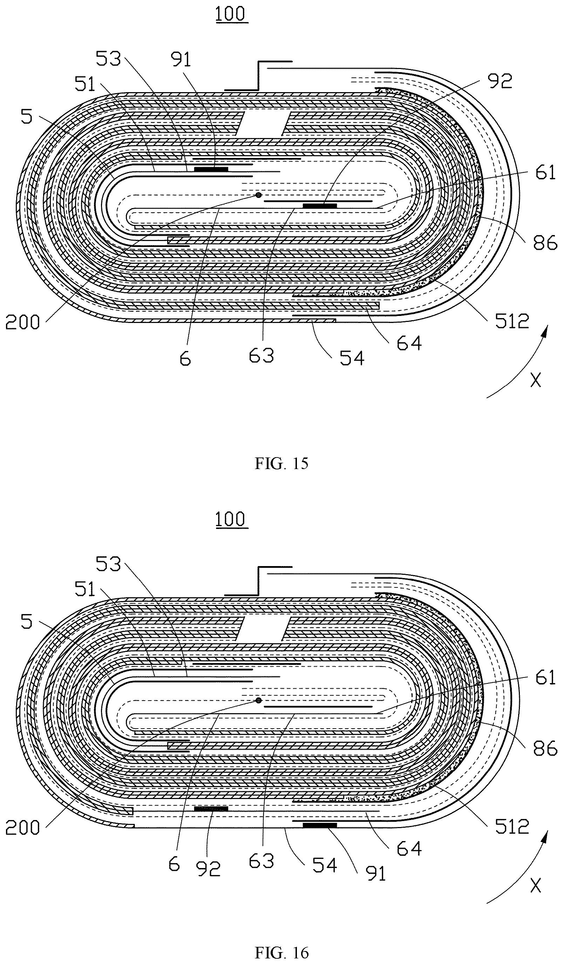

As shown in Figs. 15 and 16, the electrode assembly 100 further includes a first metal portion 91 and a second metal portion 92.

The first electrode plate 5 includes a first starting part 53 and a first ending part 54. The first starting part 53 is close to a winding starting end of the first electrode plate 5, and the first ending part 54 is close to the winding tail end of the first electrode plate 5 and located on the second part 512.

The second electrode plate 6 includes a second starting part 63 and a second ending part 64. The second starting part 63 is close to the winding starting end of the second electrode plate 6, and the second end part 64 is close to the winding tail end of the second electrode plate 6.

The first metal part 91 and the second metal part 92 may be electrically connected to the first starting part 53 and the second starting part 63, respectively, or to the first ending part 54 and the second ending part 64, respectively, so that the electrochemical device can transmit electric energy to power an external device.

In summary, the electrochemical device connects the outer surfaces of the first part 511 and the second part 512 and/or covers the outer surface of the bending part of the second part 512 through the conductive part, so that the conductive part covers a region prone to a fracture of the current collector. After the current collector fractures, the conductive member can electrically connect the electrode plate at the fracture of the current collector, which reduces a capacity loss of the electrochemical device due to the fracture of the current collector or a risk of short circuit caused by the fracture of the current collector. Meanwhile, the conductive member has a simple and reliable structure and low cost.

In addition, those skilled in the art can also make other changes within the spirit of the present application.

## Claims

1. An electrochemical device, comprising an electrode assembly (100), the electrode assembly (100) being configured to be a wound structure, and the electrode assembly (100) being provided with a first bending section (1) and a first section (2) connected to the first bending section (1), the first section (2) is a straight section;
wherein the electrode assembly (100) comprises:
a first electrode plate (5) including a first current collector (51) and a first active material layer (52) arranged on the first current collector (51); wherein along a winding direction (X), the first current collector (51) includes a first part (511) and a second part (512) connected in sequence, both surfaces of the first part (511) are provided with the first active material layer (52), an inner surface of the second part (512) is provided with the first active material layer (52), the outer surface of the second part (512) exposes the first current collector (51), the second part (512) comprises a connecting part (5121) connected with the first part (511), the connecting part (5121) is located on the first section (2), and the second part (512) includes a bending part located at an outermost layer of the first bending section (1); and
a conductive member connecting an outer surface of the second part (512) and the first active material layer (52) arranged on an outer surface of the first part (511), and the conductive member is connected with an outer surface of the connecting part (5121).

2. The electrochemical device according to claim 1, **characterized in that**, the electrode assembly (100) further comprises a first adhesive member (84), and the first adhesive member (84) adheres the conductive member and the first electrode plate (5), wherein the first adhesive member (84) is arranged on a side of the first conductive member (81) facing away from the first electrode plate (5); and/or
the first electrode plate (5) is a negative electrode plate, and the outer surface of the bending part is provided with the first active material layer (52);
and/or
the second part (512) is a tail part of the electrode assembly (100) along the winding direction (X); and/or
the electrode assembly (100) further comprises a second electrode plate (6) and a separator (7) arranged between the first electrode plate (5) and the second electrode plate (6), and the first electrode plate (5), the second electrode plate (6) and the separator (7) are laminated in sequence and wound.

3. The electrochemical device according to claim 1, **characterized in that**, the conductive member comprises a metal sheet or a conductive tape.

4. The electrochemical device according to claim 3, **characterized in that**, the conductive tape comprises a substrate layer (811) and a conductive layer (812); the substrate layer (811) and the conductive layer (812) are laminated.

5. The electrochemical device according to claim 4, **characterized in that**, the conductive layer (812) comprises conductive particles and an adhesive material.

6. The electrochemical device according to claim 4, **characterized in that**, the conductive tape further comprises an adhesive layer (813);
the adhesive layer (813) is arranged between the substrate layer (811) and the conductive layer (812); or
the adhesive layer (813) is arranged on a surface of the substrate layer (811), and the conductive layer (812) is arranged on the surface of the substrate layer (811) on a same side as the adhesive layer (813).

7. The electrochemical device according to claim 1, **characterized in that**, the conductive member comprises a first conductive member (81) and a second conductive member (82), the first conductive member (81) connects the outer surface of the second part (512) and the first active material layer (52) arranged on the outer surface of the first part (511), and the second conductive member (82) is arranged on the outer surface of the bending part.

8. The electrochemical device according to claim 7, **characterized in that**, the first conductive member (81) is connected with the second conductive member (82).

9. The electrochemical device according to claim 1, **characterized in that**, the electrode assembly (100) is further provided with, a second bending section (3) and a second section (4), and along the winding direction (X), the first bending section (1), the first section (2), the second bending section (3) and the second section (4) are connected in sequence, and the connecting part (5121) is located in the first section (2).

10. The electrochemical device according to claim 1, **characterized in that**, the electrode assembly (100) further comprises a metal part, and along the winding direction (X), the second part (512) further includes a tail part, and the metal part is connected with the tail part.

11. The electrochemical device according to claim 10, **characterized in that**, both surfaces of the tail part expose the first current collector (51).

12. The electrochemical device according to claim 4, **characterized in that**, the substrate layer (811) comprises at least one selected from the group consisting of cellulose derivative, polyvinyl chloride, polyolefin, polystyrene, polyester, polyimide, polyamide, polycarbonate and polyphenylene sulfide.

13. The electrochemical device according to claim 5, **characterized in that**, the adhesive material comprises at least one selected from the group consisting of rubber resin, acrylic resin and silicone resin;
the conductive particles comprise at least one selected from the group consisting of metal particles, conductive polymers and carbon materials;
the conductive polymer comprises at least one selected from the group consisting of polythiophene, polyaniline, polypyrrole and polyacetylene;
the carbon material comprises at least one selected from the group consisting of carbon black, acetylene black, Ketjen black, graphite, graphene, carbon nanotubes and carbon nanorods.

14. An electronic device, comprising the electrochemical device according to any one of claims 1 to 13.

## Patentansprüche

1. Elektrochemische Vorrichtung, umfassend eine Elektrodenanordnung (100), wobei die Elektrodenanordnung (100) als gewickelte Struktur ausgebildet ist und die Elektrodenanordnung (100) mit einem ersten Biegeabschnitt (1) und einem ersten Abschnitt (2) versehen ist, der mit dem ersten Biegeabschnitt (1) verbunden ist, wobei der erste Abschnitt (2) ein gerader Abschnitt ist,
wobei die Elektrodenanordnung (100) umfasst:
eine erste Elektrodenplatte (5), die einen ersten Stromkollektor (51) und eine auf dem ersten Stromkollektor (51) angeordnete erste Aktivmaterialschicht (52) umfasst; wobei der erste Stromkollektor (51) entlang einer Wickelrichtung (X) einen ersten Teil (511) und einen zweiten Teil (512) umfasst, die in dieser Reihenfolge verbunden sind, wobei beide Oberflächen des ersten Teils (511) mit der ersten Aktivmaterialschicht (52) versehen sind, eine Innenfläche des zweiten Teils (512) mit der ersten Aktivmaterialschicht (52) versehen ist, die Außenfläche des zweiten Teils (512) den ersten Stromkollektor (51) freilegt, der zweite Teil (512) einen mit dem ersten Teil (511) verbundenen Verbindungsteil (5121) umfasst, der Verbindungsteil (5121) auf dem ersten Abschnitt (2) angeordnet ist und der zweite Teil (512) einen Biegeteil umfasst, der sich in einer äußersten Schicht des ersten Biegeabschnitts (1) befindet; und
ein leitendes Element, das eine Außenfläche des zweiten Teils (512) mit der auf einer Außenfläche des ersten Teils (511) angeordneten ersten Aktivmaterialschicht (52) verbindet, wobei das leitende Element mit einer Außenfläche des Verbindungsteils (5121) verbunden ist.

2. Elektrochemische Vorrichtung nach Anspruch 1, **dadurch gekennzeichnet, dass** die Elektrodenanordnung (100) ferner ein erstes Klebeelement (84) umfasst und das erste Klebeelement (84) das leitende Element und die erste Elektrodenplatte (5) verklebt, wobei das erste Klebeelement (84) auf einer von der ersten Elektrodenplatte (5) abgewandten Seite des ersten leitenden Elements (81) angeordnet ist;
und/oder
die erste Elektrodenplatte (5) eine negative Elektrodenplatte ist und die Außenfläche des Biegeteils mit der ersten Aktivmaterialschicht (52) versehen ist;
und/oder
der zweite Teil (512) ein Endabschnitt der Elektrodenanordnung (100) entlang der Wickelrichtung (X) ist;
und/oder
die Elektrodenanordnung (100) ferner eine zweite Elektrodenplatte (6) und einen zwischen der ersten Elektrodenplatte (5) und der zweiten Elektrodenplatte (6) angeordneten Separator (7) umfasst, wobei die erste Elektrodenplatte (5), die zweite Elektrodenplatte (6) und der Separator (7) in dieser Reihenfolge laminiert und gewickelt sind.

3. Elektrochemische Vorrichtung nach Anspruch 1, **dadurch gekennzeichnet, dass** das leitende Element ein Metallblech oder ein leitendes Band umfasst.

4. Elektrochemische Vorrichtung nach Anspruch 3, **dadurch gekennzeichnet, dass** das leitende Band eine Substratschicht (811) und eine leitende Schicht (812) umfasst, wobei die Substratschicht (811) und die leitende Schicht (812) laminiert sind.

5. Elektrochemische Vorrichtung nach Anspruch 4, **dadurch gekennzeichnet, dass** die leitende Schicht (812) leitende Partikel und ein Klebematerial umfasst.

6. Elektrochemische Vorrichtung nach Anspruch 4, **dadurch gekennzeichnet, dass** das leitende Band ferner eine Klebeschicht (813) umfasst, wobei die Klebeschicht (813) zwischen der Substratschicht (811) und der leitenden Schicht (812) angeordnet ist; oder die Klebeschicht (813) auf einer Oberfläche der Substratschicht (811) angeordnet ist und die leitende Schicht (812) auf der Oberfläche der Substratschicht (811) auf derselben Seite wie die Klebeschicht (813) angeordnet ist.

7. Elektrochemische Vorrichtung nach Anspruch 1, **dadurch gekennzeichnet, dass** das leitende Element ein erstes leitendes Element (81) und ein zweites leitendes Element (82) umfasst, wobei das erste leitende Element (81) die Außenfläche des zweiten Teils (512) mit der auf der Außenfläche des ersten Teils (511) angeordneten ersten Aktivmaterialschicht (52) verbindet und das zweite leitende Element (82) auf der Außenfläche des Biegeteils angeordnet ist.

8. Elektrochemische Vorrichtung nach Anspruch 7, **dadurch gekennzeichnet, dass** das erste leitende Element (81) mit dem zweiten leitenden Element (82) verbunden ist.

9. Elektrochemische Vorrichtung nach Anspruch 1, **dadurch gekennzeichnet, dass** die Elektrodenanordnung (100) ferner mit einem zweiten Biegeabschnitt (3) und einem zweiten Abschnitt (4) versehen ist und entlang der Wickelrichtung (X) der erste Biegeabschnitt (1), der erste Abschnitt (2), der zweite Biegeabschnitt (3) und der zweite Abschnitt (4) in dieser Reihenfolge verbunden sind, wobei der Verbindungsteil (5121) im ersten Abschnitt (2) angeordnet ist.

10. Elektrochemische Vorrichtung nach Anspruch 1, **dadurch gekennzeichnet, dass** die Elektrodenanordnung (100) ferner ein Metallteil umfasst und entlang der Wickelrichtung (X) der zweite Teil (512) ferner einen Endabschnitt umfasst, wobei das Metallteil mit dem Endabschnitt verbunden ist.

11. Elektrochemische Vorrichtung nach Anspruch 10, **dadurch gekennzeichnet, dass** beide Oberflächen des Endabschnitts den ersten Stromkollektor (51) freilegen.

12. Elektrochemische Vorrichtung nach Anspruch 4, **dadurch gekennzeichnet, dass** die Substratschicht (811) mindestens eines umfasst, das aus der Gruppe ausgewählt ist, die besteht aus: Cellulosederivat, Polyvinylchlorid, Polyolefin, Polystyrol, Polyester, Polyimid, Polyamid, Polycarbonat und Polyphenylensulfid.

13. Elektrochemische Vorrichtung nach Anspruch 5, **dadurch gekennzeichnet, dass**: das Klebematerial mindestens eines umfasst, das aus der Gruppe ausgewählt ist, die besteht aus: Kautschukharz, Acrylharz und Silikonharz; die leitenden Partikel mindestens eines umfassen, das aus der Gruppe ausgewählt ist, die besteht aus: Metallpartikeln, leitfähigen Polymeren und Kohlenstoffmaterialien; das leitfähige Polymer mindestens eines umfasst, das aus der Gruppe ausgewählt ist, die besteht aus: Polythiophen, Polyanilin, Polypyrrol und Polyacetylen; das Kohlenstoffmaterial mindestens eines umfasst, das aus der Gruppe ausgewählt ist, die besteht aus: Ruß, Acetylenruß, Ketjenruß, Graphit, Graphen, Kohlenstoffnanoröhren und Kohlenstoffnanostäben.

14. Elektronische Vorrichtung, umfassend die elektrochemische Vorrichtung nach einem der Ansprüche 1 bis 13.

## Revendications

1. Dispositif électrochimique, comprenant un ensemble d'électrodes (100), l'ensemble d'électrodes (100) étant configuré comme une structure enroulée, et l'ensemble d'électrodes (100) étant pourvu d'une première section courbée (1) et d'une première section (2) reliée à la première section courbée (1), la première section (2) étant une section droite;
dans lequel l'ensemble d'électrodes (100) comprend:
une première plaque d'électrode (5) incluant un premier collecteur de courant (51) et une première couche de matériau actif (52) disposée sur le premier collecteur de courant (51);
dans lequel, le long d'une direction d'enroulement (X), le premier collecteur de courant (51) comprend une première partie (511) et une deuxième partie (512) reliées en séquence, les deux surfaces de la première partie (511) étant pourvues de la première couche de matériau actif (52), une surface intérieure de la deuxième partie (512) étant pourvue de la première couche de matériau actif (52), la surface extérieure de la deuxième partie (512) exposant le premier collecteur de courant (51), la deuxième partie (512) comprenant une partie de connexion (5121) reliée à la première partie (511), la partie de connexion (5121) étant située sur la première section (2), et la deuxième partie (512) incluant une partie courbée située dans la couche la plus externe de la première section courbée (1); et
un élément conducteur reliant une surface extérieure de la deuxième partie (512) et la première couche de matériau actif (52) disposée sur une surface extérieure de la première partie (511), et l'élément conducteur étant relié à une surface extérieure de la partie de connexion (5121).

2. Dispositif électrochimique selon la revendication 1, **caractérisé en ce que** l'ensemble d'électrodes (100) comprend en outre un premier élément adhésif (84), et le premier élément adhésif (84) fixe l'élément conducteur à la première plaque d'électrode (5), le premier élément adhésif (84) étant disposé sur un côté de le premier élément conducteur (81) opposé à la première plaque d'électrode (5);
et/ou
la première plaque d'électrode (5) est une plaque d'électrode négative, et la surface extérieure de la partie courbée est pourvue de la première couche de matériau actif (52); et/ou
la deuxième partie (512) est une partie terminale de l'ensemble d'électrodes (100) le long de la direction d'enroulement (X);
et/ou
l'ensemble d'électrodes (100) comprend en outre une deuxième plaque d'électrode (6) et un séparateur (7) disposé entre la première plaque d'électrode (5) et la deuxième plaque d'électrode (6), et la première plaque d'électrode (5), la deuxième plaque d'électrode (6) et le séparateur (7) sont stratifiés en séquence et enroulés.

3. Dispositif électrochimique selon la revendication 1, **caractérisé en ce que** l'élément conducteur comprend une feuille métallique ou un ruban conducteur.

4. Dispositif électrochimique selon la revendication 3, **caractérisé en ce que** le ruban conducteur comprend une couche de substrat (811) et une couche conductrice (812); la couche de substrat (811) et la couche conductrice (812) sont stratifiées.

5. Dispositif électrochimique selon la revendication 4, **caractérisé en ce que** la couche conductrice (812) comprend des particules conductrices et un matériau adhésif.

6. Dispositif électrochimique selon la revendication 4, **caractérisé en ce que** le ruban conducteur comprend en outre une couche adhésive (813);
la couche adhésive (813) est disposée entre la couche de substrat (811) et la couche conductrice (812);
ou
la couche adhésive (813) est disposée sur une surface de la couche de substrat (811), et la couche conductrice (812) est disposée sur la surface de la couche de substrat (811) du même côté que la couche adhésive (813).

7. Dispositif électrochimique selon la revendication 1, **caractérisé en ce que** l'élément conducteur comprend un premier élément conducteur (81) et un deuxième élément conducteur (82), le premier élément conducteur (81) relie la surface extérieure de la deuxième partie (512) et la première couche de matériau actif (52) disposée sur la surface extérieure de la première partie (511), et le deuxième élément conducteur (82) est disposé sur la surface extérieure de la partie courbée.

8. Dispositif électrochimique selon la revendication 7, **caractérisé en ce que** le premier élément conducteur (81) est relié au deuxième élément conducteur (82).

9. Dispositif électrochimique selon la revendication 1, **caractérisé en ce que** l'ensemble d'électrodes (100) est en outre pourvu d'une deuxième section courbée (3) et d'une deuxième section (4), et le long de la direction d'enroulement (X), la première section courbée (1), la première section (2), la deuxième section courbée (3) et la deuxième section (4) sont reliées en séquence, et la partie de connexion (5121) est située dans la première section (2).

10. Dispositif électrochimique selon la revendication 1, **caractérisé en ce que** l'ensemble d'électrodes (100) comprend en outre une partie métallique, et le long de la direction d'enroulement (X), la deuxième partie (512) comprend en outre une partie terminale, et la partie métallique est reliée à la partie terminale.

11. Dispositif électrochimique selon la revendication 10, **caractérisé en ce que** les deux surfaces de la partie terminale exposent le premier collecteur de courant (51).

12. Dispositif électrochimique selon la revendication 4, **caractérisé en ce que** la couche de substrat (811) comprend au moins un élément sélectionné dans le groupe consistant en: dérivé de cellulose, chlorure de polyvinyle, polyoléfine, polystyrène, polyester, polyimide, polyamide, polycarbonate et sulfure de polyphénylène.

13. Dispositif électrochimique selon la revendication 5, **caractérisé en ce que**:
le matériau adhésif comprend au moins un élément sélectionné dans le groupe consistant en : résine de caoutchouc, résine acrylique et résine de silicone;
les particules conductrices comprennent au moins un élément sélectionné dans le groupe consistant en: particules métalliques, polymères conducteurs et matériaux carbonés;
le polymère conducteur comprend au moins un élément sélectionné dans le groupe consistant en : polythiophène, polyaniline, polypyrrole et polyacétylène;
le matériau carboné comprend au moins un élément sélectionné dans le groupe consistant en : noir de carbone, noir d'acétylène, noir de Ketjen, graphite, graphène, nanotubes de carbone et nanobâtonnets de carbone.

14. Dispositif électronique, comprenant le dispositif électrochimique selon l'une quelconque des revendications 1 à 13.
